(19) **Europäisches Patentamt**

**European Patent Office**

**Office européen des brevets**

(11)   **EP 0 552 583 B1**

(12)   **EUROPEAN PATENT SPECIFICATION**

(45) Date of publication and mention
of the grant of the patent:
**23.10.1996  Bulletin 1996/43**

(51) Int. Cl.$^6$: **C02F 11/12,  B01D 33/048**

(21) Application number: **92610087.6**

(22) Date of filing: **22.12.1992**

(54) **Method and plant for the destruction of organic sludge, especially sewage sludge**

Verfahren und Anlage zur Aufbereitung von organischem Schlamm, insbesondere Klärschlamm

Procédé et installation pour la destruction de boues organiques, spécialement de boues activées

(84) Designated Contracting States:
**BE DE DK FR GB NL SE**

(30) Priority:  **23.12.1991 DK 2063/91**

(43) Date of publication of application:
**28.07.1993  Bulletin 1993/30**

(73) Proprietor: **Bio-Con A/S**
**DK-9700 Broenderslev (DK)**

(72) Inventors:
• **Kopp-Sorensen, Johan**
**DK-9760 Vra (DK)**

• **Jensen, Jens Ostergaard**
**DK-9700 Bronderslev (DK)**

(74) Representative: **Larsen, Hans Ole et al**
**Larsen & Birkeholm A/S,**
**Banegaardspladsen 1,**
**P.O. Box 362**
**1570 Copenhagen V (DK)**

(56) References cited:
**DE-A- 3 518 323          US-A- 3 559 807**

• **DERWENT ACCESSION NO. 87-32 955, Questel Tele- systems (WPI) DERWENT PUBLICATIONS LTD., London**

EP 0 552 583 B1

Printed by Rank Xerox (UK) Business Services
2.13.8/3.4

## Description

### BACKGROUND OF THE INVENTION

The invention relates to a method for the destruction of organic sludge, especially sewage sludge containing a maximum of 40% dry matter, and comprising a drying process where the sludge is laid out on a conveyor belt which is fed forward at a controlled speed. In the laying-out, the sludge is of such a form that the free surface of the sludge divided by the volume of the sludge gives a ratio value in the order of between 5 and 13 cm$^{-1}$, and where during transport on the belt the sludge is dried by hot gases which permeate the belt and sweep the sludge.

Furthermore, the invention relates to a plant for the execution of the method and comprising a dryer for organic sludge, especially sewage sludge, and wherein there is provided a conveyor belt which can be fed forward at a controlled speed and which can be permeated with air. The plant has an device for the laying-out of the sludge on the conveyor belt in a form with a ratio between the surface area and volume, where the ratio value which arises by dividing the surface with the volume in the condition immediately upon laying-out is greater than 4 cm$^{-1}$, preferably between 5 cm$^{-1}$ and 13 cm$^{-1}$, and where in the dryer there are one or more injection openings for hot gases for the drying of the sludge, and/or guideplates for the gases arranged so that the gases can be forced through the conveyor belt to sweep the sludge.

Organic sludge, including sewage sludge, has a paste-like consistency and is sticky and is thus difficult to convey and handle. The sludge thus adheres to all surfaces and is difficult to remove. Moreover, during the drying process, the sludge has a tendency to bake together to form a solid, cohesive mass, where the inside of the mass dries only with great difficulty.

Such a method and such a plant are known from DE A1 3,518,323, where dewatered sludge is transferred to a special press apparatus which presses sausage-shaped pieces with a diameter of about 5 mm and a length of about 40 mm out through the perforated bottom of the press apparatus. The sludge pieces fall down on to the conveyor belt which carries piles of sludge pieces through a drying oven where hot air passes through the conveyor belt. The disadvantage of this known technique is that the sausage-shaped pieces can fall on top of each other and hang together in the laying-out in portions on the belt. This is amplified by the fact that the laying-out on the belt is effected outside of the oven, after which the sludge pieces can stick together and to the belt before the sludge reaches into the oven. The drying is effected in one process step.

### ADVANTAGES OF THE INVENTION

The method according to the invention has the special feature that the sludge is laid out on the conveyor belt with one or more separate nozzles, which during the laying-out are moved transversely to the belt's direction of movement, so that a string or several mutually separated strings of sludge are formed, and that the belt, at the place where the laying-out takes place, is permeated by the gases which at this place have a temperature of at least 110°, preferably between 150 and 250°.

Due to the ratio between the surface area and the volume of the sludge when it is applied to the conveyor, and at the same time that the surface is immediately exposed to the hot gases, the outer layer and the layer immediately under the surface in the sludge string will be dried very quickly to a relatively firm and porous scale, which prevents adhesion to the conveyor belt and the sticking-together of the sludge parts during the further drying. The sludge can easily be loosened from the surface of the belt and conveyed further in the form of pellets or strings. In the further drying, which can be effected in several steps, the porous scale enables the insides of the strings to be dried. The relatively low temperature of the gases used for the drying also means that toxic gases are not released during the drying process.

The special characteristic of the plant according to the invention is that the device for laying out the sludge consists of one or more mutually separated nozzles which can be moved transversely to the belt's direction of movement, and that guideplates and injection openings for the gases are disposed in such a manner that the gases are made to flow through the belt at the place or places where the sludge will be applied to the belt during the laying-out.

The method can thus be executed with relatively simple means and with the advantages as described above. By using a single or several separate nozzles which are movable, a large amount of sludge with relatively great density can be laid out on the belt without the laying-out being disturbed by irregularities, which would be the case when using a manifold which opens out into a number of nozzles. It is known to use such a manifold with static nozzles which apply straight, parallel strings on the belt, where the strings have a smaller ratio between the surface area and the volume than with the invention. In the aforementioned case there is the risk that some of the nozzles can get blocked, in that the sludge simply finds its way to the non-blocked nozzles, with subsequently less material being laid out. This happens particularly with the relatively thin sludge strings which are necessary in order to achieve the ratio between the volume and the surface of the sludge. With the transverse movement of each nozzle, the sludge can be laid relatively densely on the conveyor belt.

With the arrangements as disclosed in claims 2 and 11 respectively, it is achieved that the upwardly-permeating gases reduce the pressure of the sludge string against the surface of the belt, hereby reducing the cohesion between sludge and belt at the place where the risk of sticking is greatest.

With an embodiment of the method as disclosed in claim 4, it is achieved that the thermal energy generated by the sludge can be used for the drying process. There is hereby provided a very energy-economical destruction process.

In the destruction of sewage sludge with a dry-matter content of less than 25%, it is preferred to use a method as disclosed in claim 5, where the drying of the sludge takes place in a two-step process in which the sludge is exposed to the hottest gases first. By using a lower temperature in the second part of the process, there is a further reduction in the risk of emission of malodorous and toxic vapours at a time when a large part of the water vapour has disappeared from the sludge. The destruction of the sludge can be held neutral, with regard to the consumption of thermal energy, right down to a drying of sewage sludge with a dry-matter content of 20%.

Furthermore, it is preferred to execute the method as disclosed in claim 6. The toxic and malodorous emissions from the flue gas which is led out to the surroundings are hereby reduced to an environmentally-acceptable level.

With the preferred embodiment of the method as disclosed in claim 8, the amount of fresh air which is added at the second conveyor belt will lower the dewpoint temperature of the drying air (the gases) used in the second part-process (a2). The added amount of fresh air determines the dewpoint of the drying air, and is greater than the furnace's need for oxygen-containing fresh air, preferably 1.5 to 5 times greater. After mixing, the surplus air is led to the first part-process (a1).

For the binding of ammonia absorbed by the gases during the drying process, it is preferred to execute the method as disclosed in claim 9. The sulphate reacts with the ammonia and ammonium sulphate is precipitated.

With the plant according to the invention, it is preferred to configure each nozzle with a nozzle opening in the order as disclosed in claim 12.

A simple, robust and reliable mechanism for the movement of the nozzle is disclosed in claim 13. Although the nozzle executes a partly circular movement due to its suspension, a cam of suitable shape can make the nozzle execute its movement with a substantially constant speed in relation to the surface of the belt.

In order to be able to carry out the two-step drying process as disclosed in claim 5, it is preferred to configure the plant as disclosed in claim 14. The first part-process (a1) is effected at the first belt, and the second part-process (a2) is effected at the lowermost belt. There is hereby achieved a very compact configuration of the plant. If the plant is configured as disclosed in claim 14, it is possible to destroy sludge containing less than 25% dry matter in a manner which is neutral from the point of view of thermal energy.

In order to give the plant a large capacity in that part of the process where there must not be any contact between the sludge strings, it is preferred to configure the drying apparatus as disclosed in claim 15, where two or more conveyors function in parallel, either above each other and/or at the side of each other. When the sludge has first passed the first critical phase, it can fall down on the lower belt where it is of no consequence that the sludge strings or pellets (the particles) lie on top of one another.

THE DRAWING

Example embodiments of the method and the plant according to the invention will now be described with reference to the drawing, where

| | |
|---|---|
| fig. 1 | shows the configuration of the plant in diagram form, |
| fig. 2 | shows in principle a vertical section through the drying apparatus of the plant, |
| fig. 3 | shows an enlarged detail of part of the conveyor in the drying apparatus, |
| fig. 4 | shows a section along the line IV-IV in fig. 3, |
| fig. 5 | shows a side view of the configuration of an device for the laying-out of sludge on the conveyor, |
| fig. 6 | shows the same as fig. 5, but seen from above, and |
| figs. 7a and 7b | show two different positions of the device during operation. |

DESCRIPTION OF EXAMPLE EMBODIMENTS

In the preferred embodiment, the plant comprises a section I where drying and combustion of the sludge is effected, section II where a treatment of the flue gas and gases deriving from the sludge is effected, and section III where the ash from the combustion process is treated. Sections II and III are not necessary for the function of section I, but provide a complete processing of the method's residual products.

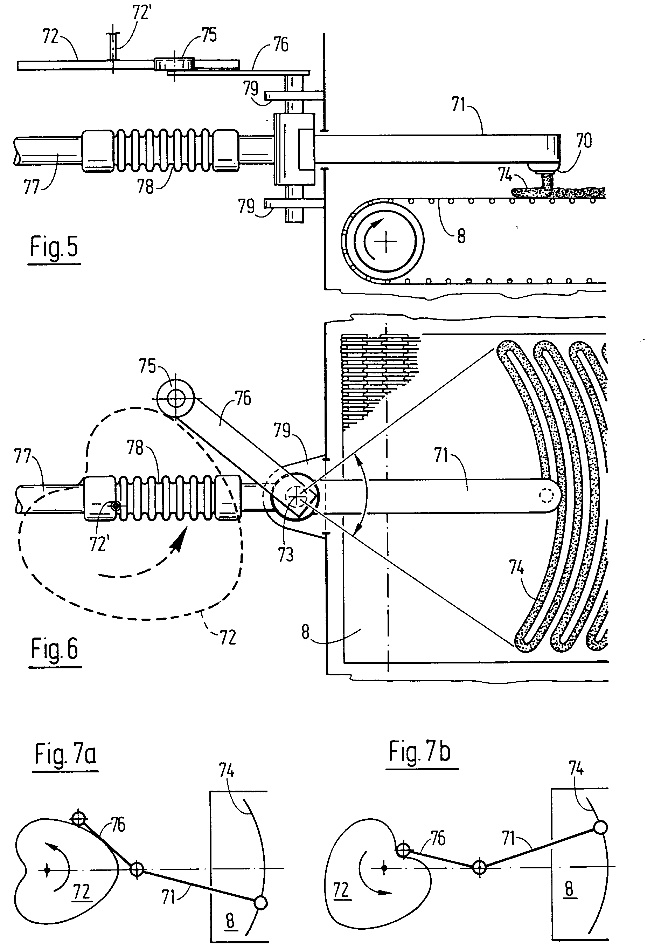

I. The plant comprises a silo 1 for dewatered sewage sludge, which with a monopump 3 and through a filter 5 can deliver the sludge to an device 7 for the distribution of the sludge on an upper conveyor 8 in the drying apparatus 9. The distribution device 7 comprises a nozzle 70 with a circular nozzle opening of 5 - 8 mm in diameter, although larger or smaller nozzle openings can be used. Due to the technical function of the monopump, there will rarely arise operational problems for reasons of a blocked nozzle 70, the reason being that the pressure in the sludge on the discharge side of the monopump merely increases until there is passage again. The nozzle 70 is disposed at the end of movable pipe 71 placed in a bearing 79, and the movement of the nozzle 70 can be controlled via a roller 75 mounted on a rigid arm 76, in that said roller 75 follows the edge of a heart-shaped cam 72. The area of movement of the pipe is a partly circular arc with fixed centrepoint 73, and the function of the cam is to ensure an equal distribution of a sludge string 74 from the nozzle 70 over the whole breadth of the belt, in that the shape of the cam ensures that the relative speed between the nozzle 70 and the belt 8 is constant, in that the cam's angular velocity around its axis 72' and the speed of the belt are constant. From fig. 7a-b will be seen how the rotation of the cam 72 can move the pipe 71 between two outer positions, see fig. 6. A pressure-constant hose 78 forms a movable connection between the movable pipe 71 and the outlet pipe 77 of the monopump. The mechanical construction of the nozzle's movement arrangement is reliable and robust in the dirty environment at the laying-out of the sludge.

It is normal to have a relatively broad conveyor 8 which, for example, can be covered by four devices 7 placed at the side of one another, where a monopump supplies each device. Each nozzle can lay-out over a breadth between 0.3 and 1.0 m on the belts 8.

As shown in fig. 2, it is preferred to have two belts 8, each with their own laying-out device 7 for sludge. The capacity can hereby be made greater in the area in which the difficult initial drying of the sludge takes place. It is preferred that the belt 8 itself is configured with steel wire pieces 92 extending in the feeding direction, said pieces 92 being secured to transverse stiffeners 93. In the laying-out, the sludge string 74 lies transversely to the direction of the pieces 92, and the least possible contact occurs, in principle point-contact, between the sludge 74 and pieces 92, see figs. 3 and 4. The direction of the drying air is indicated by the arrows 94, and this reduces the pressure of the sludge against the wire pieces 92 in the laying-out area 98.

The drying apparatus 9 is divided by a horizontal dividing wall 90 which, apart from an opening 13 at the one end of the belts 8 and 11, separates two upper belts 8 from a lower conveyor belt 11. The opening 13 serves primarily as a chute for partly dried sludge falling from the upper belts 8 to the lower belt 11, and secondarily for the equalization of the amounts of air fed to and led from the spaces around the upper and lower belts 8 and 11.

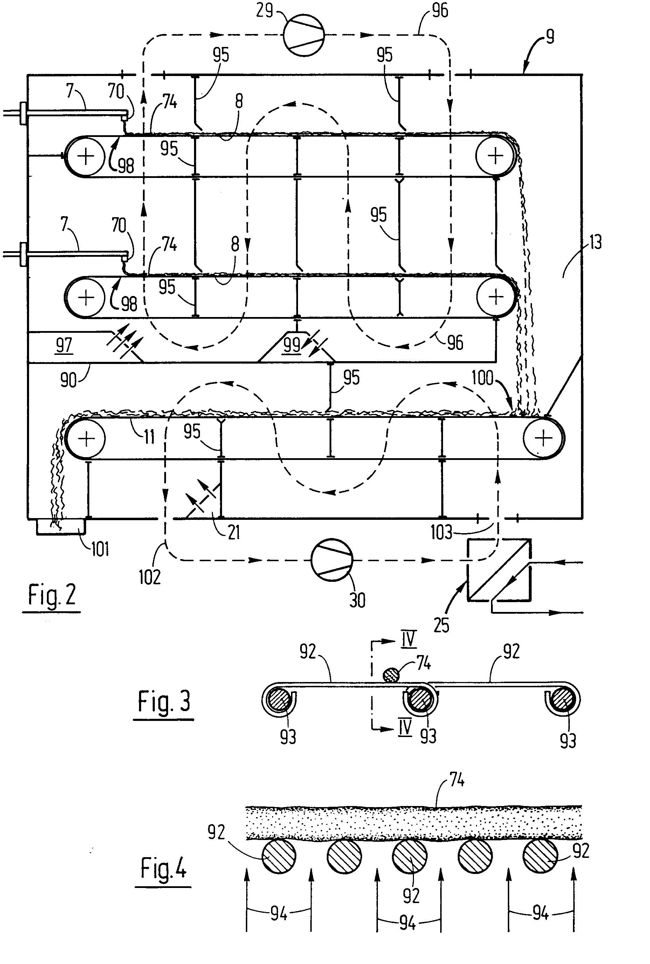

The drying air 96 in the plant 9 is forced to circulate as shown in fig. 2. With suitable dividing plates 95, 90% of the drying air is circulated. 10% of the drying air 96 is supplied as hot gases from a combustion which is described in more detail below. The supply takes place at a box 97 placed directly below the belts' areas 98, where the sludge strings are laid out. The mixing of drying air 96 in the areas 98 is effected in such a manner that the drying-air temperature is in the range between 150

and 250°C. The advantage of using such a low temperature is that the evaporation of toxic organic connections from the sludge is avoided. During the circulation of the air 96, the temperature drops to around 120°C, and 10% of the gases are sucked out through the box 99. After drying on the belts 8, it is typical for the dry-matter contents in the sludge to increase to 50 weight-%, in that the wet part of the sludge lies in the centre of the sludge strings 74.

The belt 11 carries a layer of partly dried sludge 100 which is retained for a longer time at a somewhat lower temperature, typically in the range of 50-60°. This belt 11 can have a much greater layer thickness than the belts 8, since the pre-dried sludge after passage of the belts 8 is not sticky and is relatively porous, which permits a slower and possibly intermittent feeding of the belt 11 with subsequent greater sludge capacity per unit area of the belt.

The belts 8 are driven continuously, and the belt 11 is driven continuously or intermittently depending on the control, which is set in accordance with the time for which the sludge is desired to be retained in the drying apparatus 9.

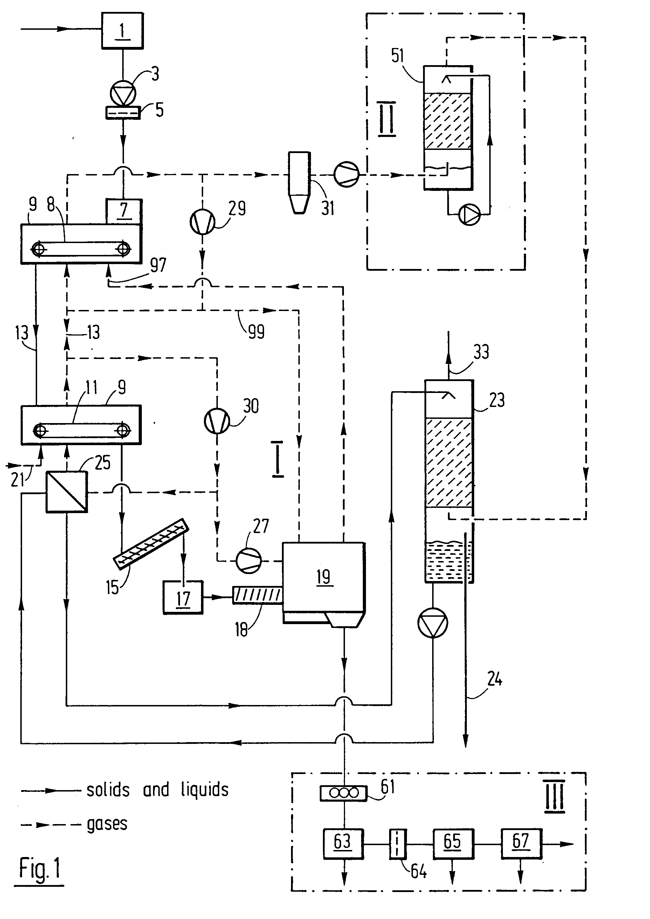

From the other end of the lowermost belt 11, the dried sludge can fall down through an opening 101, and thereafter, see fig. 1, it is conveyed via a worm conveyor 15 to a container 17 for the sludge. From the container 17, the sludge can be fed via a stoker conveyor 18 into a commonly-known combustion furnace 19 with travelling grate. The furnace 19 has a post-combustion chamber in which the flue gases are retained for more than 2 seconds at a temperature in excess of 875°C. The quality of the combustion is hereby so good that carbon monoxide and the hydrocarbon contents in the flue gas become very low and environmentally acceptable. The quality of the combustion, together with a drying process which is carried out at very low temperature, means that the emission of nitrogen oxides, dioxins, furanes etc. become very low. The ash from the combustion can be collected for depositing or for further processing in section III.

Section I also comprises a commonly-known flue-gas scrubber 23 and an air/water heat exchanger 25. The scrubber 23 is used to process the gas-containing air removed from the upper part of the drying apparatus 9, and the hereby heated water, where the heat comes from the condensation of the water vapour from the flue gas, is used in the heat exchanger 25 for the heating of circulating gases before these are introduced into the drying apparatus 9 at the lower belt 11. The treated air is conducted further to the surroundings through a discharge pipe 33. The condensed water in the flue-gas scrubber 23 is led away through the overflow pipe 24 back to the inlet of a waste water cleaning plant.

The oxygen-containing fresh air needed for the furnace 19 is sucked in at an induction opening 21 in the plant 9 at the lower belt 11, whereby a mixing can be effected with the circulating gases 102. The dewpoint of the circulating gases 102 is thus reduced, and as a consequence hereof they are able to absorb further water(steam) from the sludge 100. The amount of fresh air is determined by the desired dewpoint of the drying air 102, and the amount is 1.5 to 5 times greater than the amount of combustion air necessary for the furnace 19.

A part of the flow of drying air 102 for the belt 11 is removed by a ventilator 27 for combustion air for the furnace 19. The fact that the combustion air is first used in the drying process means that the total amount of fresh air and discharge air is minimized.

The hot flue gases from the furnace 19 are conducted as shown with a ventilator 29 to the uppermost belt 8, where the supply of the gases is effected immediately below the distribution device 7 to the material-carrying, upwardly-facing part of the belt 8, as described above. Part of the gas flow is conducted further through a bag filter 31 for the removal of possible dust before the gases are processed further in section II and in the scrubber 23. A second part of the flow is led to the furnace 19 for mixing with and cooling of the flue gases from said furnace 19.

Circulation of the drying air 96,102 with the ventilator 29 and a ventilator 30 ensures that a sufficiently high air velocity is achieved, preferably 3-4 m/s, between sludge and drying air at the drying process on the belts 8 and 11. The part-process a1 is effected with the belts 8 and associated drying circuit 29,96, while the part-process a2 can be effected with the belt 11 and the drying circuit 30,102.

The drying apparatus 9 can be of modular construction so that several belts 8,11 can be placed at the side of or above one another, whereby the capacity can be multiplied.

Generally, the lower belt 11 and the circuit with the exchanger 25 and the scrubber 23 with associated channel connections are not necessary when the sludge has a dry-matter content greater than 25%. It is typical for dewatered, community sewage sludge to have a dry-matter content of around 20%, and operational tests with the plant show good function down to about 14% dry-matter content.

With sludge types having less than 20% dry-matter, an auxiliary fuel must be introduced, for example wood chips, which are added to the buffer silo 17.

II. In a scrubbing tower 51, the ammonia-containing flue gases from the drying process in section I are exposed to a counter-flow of liquefied or atomized sulphuric acid, with the following reaction

$$2NH_3 + H_2SO_4 \rightarrow (NH_4)_2SO_4$$

The reaction product ammonium sulphate can be used as agricultural fertilizer.

With section II, the discharge of ammonia to the atmosphere is consequently avoided.

III. The ash from the furnace 19 is conveyed to a crusher 61 which comminutes the ash before it is supplied to a first vessel 63 with sulphuric acid, where pH is less than 2. During a stirring, there occurs a dissociation of the metallic salts in the ash, primarily of aluminium phosphate. As phosphoric acid does not appear dissociated at pH values less than 2, $H_3PO_4$ is formed. Stirring is carried out for a period of time. Aluminium is added during continued stirring and heavy metals not already sedimented are precipitated.

In the chemical reactions there occurs a dissolution of some metal oxides and precipitation of metal sulphate:

$$PbO + H_2SO_4 \rightarrow H_2O + PbSO_4$$

$$CdO + H_2SO_4 \rightarrow H_2O + CdSO_4$$

The non-soluble oxides HgO and CuO are precipitated from the solution.

Certain metal oxides and aluminium phosphate are dissolved in the solution.

$$NiO + H_2SO_4 \rightarrow Ni^{++}SO_4^{--} + H_2O$$

$$2CrO_3 + 3H_2SO_4 \rightarrow 2Cr^{+++}3SO_4^{--} + H_2O$$

$$ZnO + H_2SO_4 \rightarrow Zn^{++}SO_4^{--} + H_2O$$

$$Al_2(PO_4)_2 + 3H_2SO_4 \rightarrow 2Al^{---}3SO_4^{--} + 2H_3PO_4$$

The free sulphations react with the aluminium and the metals are precipitated.

$$3NiSO_4 + 2Al \rightarrow Al_2(SO_4)_3 + 3Ni$$

$$Cr_2(SO_4)_3 + 2Al \rightarrow Al_2(SO_4)_3 + 2Cr$$

$$3ZnSO_4 + 2Al \rightarrow Al_2(SO_4)_3 + 3Zn$$

After a period of time, the stirrer is stopped. The heavy metals fall to the bottom and dissolved in the solution there is now $Al_2(SO_4)_3 + H_3PO_4 + $ possible surplus of $H_2SO_4$. From an overflow placed a short distance from the bottom of the vessel, the solution-dissolved materials are fed through a filter 64 to a second vessel 65.

To the vessel 65 is added $Ca(OH)_2$, though not to the extent that the pH exceeds 6.5. Aluminium sulphate is thus precipitated following the formula:

$$3Ca(OH)_2 + Al_2(SO_4)_3 \rightarrow 3CaSO_4 + 2Al(OH)_3$$

Calcium sulphate and aluminium hydroxide are precipitated. Surplus sulphuric acid reacts and calcium sulphate is precipitated following the formula:

$$Ca(OH)_2 + H_2SO_4 \rightarrow CaSO_4 + 2H_2O$$

Phosphoric acid is converted to calcium dihydrogen phosphate following the formula:

$$2H_3PO_4 + Ca(OH)_2 \rightarrow Ca(H_2PO_4)_2 + 2H_2O$$

The calcium dihydrogen phosphate is found dissolved in the solution and is tapped off into storage containers from which it can be sold as agricultural fertilizer.

The sediment from the vessel 65 is transferred to a third vessel 67 where sulphuric acid is added to calcium sulphate and aluminium hydroxide which dissolves. Calcium sulphate again precipitates and can be removed from the bottom of the vessel and used as fertilizer.

Aluminium hydroxide reacts chemically following the formula:

$$2Al(OH)_3 + 3H_2SO_4 \rightarrow Al_2(SO_4)_3 + 6H_2O$$

Aluminium sulphate is conducted back to the cleaning plant where it is reused in a new phosphor precipitation process. The precipitated heavy metals are led away for storage.

## Claims

1. Method for the destruction of organic sludge, especially sewage sludge containing a maximum of 40% dry matter, and comprising a drying process in which the sludge is laid out on a conveyor which is driven at a controlled speed, and where the sludge when laid out is formed in such a manner that the free surface of the sludge divided by the volume of the sludge gives a ratio of at least 4 cm$^{-1}$, preferably between 5 and 13 cm$^{-1}$, and where during the transport on the conveyor the sludge is dried by hot gases which permeate the conveyor belt, **characterized in that** the sludge is laid out on the conveyor belt via one or more separate nozzles which, during the laying-out, are moved transversely to the feeding direction of the belt so that there is formed a string of sludge or several mutually separate strings of the sludge, and where the belt, at the place where the sludge is laid out, is permeated by the gases, which at this place have a temperature of at least 110°C, preferably between 150 and 250°C.

2. Method according to claim 1, **characterized in that** the gases at the place where the laying-out is effected are led upwards in the direction from the underside of the belt towards its upperside, where the sludge is laid out.

3. Method according to claim 1 or 2, **characterized in that** the nozzle moves at a substantially constant speed in relation to the surface of the belt on which the sludge is laid out.

4. Method according to one of the claims 1-3, **characterized in that** the method comprises a first process step (a) consisting of the drying process and at least two process steps in addition to the first process step, where in the second step (b) the sludge is burned in a combustion furnace, and where in a third step (c) the ash from the furnace is led away for depositing as use for road-filler or for further processing, where flue gas from the combustion in the furnace is conducted to the first step for use in the drying and the evacuation of gases from the sludge, and that the flue gas is thereafter wholly or partly conducted to the outside surroundings.

5. Method according to one of the claims 1-4, **characterized in that** the drying process is divided into two part-processes (a1,a2), where in the first part-process (a1) the sludge is laid out on a first conveyor and here permeated by the gases which have the highest temperature, and where thereafter in the second part-process the sludge is transferred from the first conveyor, e.g. by falling, to a second conveyor where the sludge is permeated by gases at a lower temperature than in the first part-process (a1).

6. Method according to the claims 1, 4 and 5, **characterized in that** in the second process step (b) there is carried out a post-combustion where the flue gases are held for more than two seconds at more than 875°C, that the temperature at the second part-process (a2) is between 40 and 65°C, and that the flue gases after the second step (b) are led through a flue-gas scrubber before being discharged to the outside surroundings.

7. Method according to claim 5 or 6, **characterized in that** the condensation heat in a part-flow of the gases, which have passed the first part-process (a1) via a smoke scrubber and a heat exchanger circuit, are used for the heating of the gases in the second part-process (a2).

8. Method according to claim 6 or 7, **characterized in that** the main part of the gas for the drying in both part-processes (a1,a2) is recirculated, and that a flow of fresh air is added in the second part-process (a2) so that fresh air here is heated by mixing together with recirculating gases, while at the same time a part-flow of drying air corresponding to the furnace's need for oxygen is conducted to the combustion air inlet of the furnace.

9. Method according to one of the claims 1-8, **characterized in that** a part-flow of the gases which have passed the drying process are conducted to a scrubber where the gases are led against a flow of liquefied or atomized sulphuric acid, whereby ammonia in the air stream is precipitated by the sulphuric acid as ammonium sulphate, and that the gases are finally led to a flue-gas scrubber before being discharged to the outside surroundings.

10. Plant for use in the execution of the method according to claim 1, and comprising a drying apparatus for organic sludge, especially sewage sludge, and wherein there is provided a conveyor which can be permeated by air and which can be driven at a controlled speed, and a device for the laying-out on the conveyor of the sludge in a form with a ratio between the surface area and volume, where the ratio which results by dividing the surface by the volume in the condition immediately upon laying-out is greater than 4 $cm^{-1}$, preferably between 5 $cm^{-1}$ and 13 $cm^{-1}$, and where the drying apparatus is provided with one or more injection openings for hot gases for the drying of the sludge, and/or guideplates for the gases disposed in such a manner that the gases can be forced through the conveyor for sweeping the sludge, **characterized in that** the device for laying-out the sludge consists of one or more mutually separate nozzles which can be moved transversely to the feeding direction of the conveyor belt, and where the guideplates and the injection openings for the gases are disposed in such a manner that the gases are made to flow through the belt at the place or the places where the sludge is laid on the belt during the laying-out.

11. Plant according to claim 10, **characterized in that** the guideplates and/or the injection openings for the gases for the drying are disposed in such a manner that the gases can be forced through the conveyor belt in an upwards direction from the underside of the belt towards the upperside of the belt in the area which can be traversed by the nozzle during the laying-out.

12. Plant according to claim 10 or 11, **characterized in that** each nozzle has a nozzle opening with an internal diameter in the range of 0.3 to 1.0 cm, preferably between 0.5 and 0.8 cm.

13. Plant according to one of the claims 10-12, **characterized in that** the nozzle is disposed on the end of an arm which is connected to a control-rod for a roller which can follow the periphery of a rotating cam.

14. Plant according to one of the claims 10-13, **characterized in that** the drying apparatus comprises two conveyors which can be permeated by air, a first arranged above a second and the second being placed in an offset position in relation to the first, so that material on the upper belt can fall from the one end of the belt down onto the lower belt, and in that injection and exhaust openings respectively are provided for the first and the second belt and are connected to each their air channel system for the recirculation of a part of the gases, and that between the belts there are dividing walls which separate the air around the belts, apart from the area at the said end of the upper belt.

15. Plant according to claim 14, **characterized in that** above the dividing wall in the drying apparatus, instead of one conveyor there are provided two or more conveyors arranged above one another and/or at the side of one another and operating in parallel, and each with its own device for the laying-out of the sludge on the belts, which are positioned in relation to one another in such a manner that material being conveyed can freely fall down onto the belt under the dividing wall.

**Patentansprüche**

1. Verfahren zum Abbau von organischem Schlamm, insbesondere Abwasserschlamm enthaltend maximal 40% Trockensubstanz, das ein Trocknungsverfahren umfaßt, bei dem der Schlamm auf einem Fördergerät, das mit kontrollierter Geschwindigkeit angetrieben wird, ausgebreitet wird, wobei der Schlamm nach dem Ausbreiten auf eine Weise geformt wird, daß das Verhältnis der freien Oberfläche des Schlammes zu dem Volumen des Schlammes mindestens 4 $cm^{-1}$, vorzugsweise zwischen 5 und 13 $cm^{-1}$, beträgt, und wobei der Schlamm während des Transports auf dem Fördergerät durch heiße Gase, die das Förderband durchdringen, getrocknet wird, dadurch gekennzeichnet, daß der Schlamm auf dem Förderband mittels einer oder mehrerer separater Düsen ausgebreitet wird, die während des Ausbreitens quer zur Bewegungsrichtung des Förderbandes bewegt werden, so daß ein Schlammstrang oder mehrere voneinander getrennte Schlammstränge gebildet werden, und wobei das Förderband an der Stelle, an der der Schlamm ausgebreitet ist, von den Gasen durchdrungen ist, die an dieser Stelle eine Temperatur von mindestens 110°C, vorzugsweise zwischen 150 und 250°C, aufweisen.

2. Verfahren gemäß Anspruch 1, dadurch gekennzeichnet, daß die Gase an der Stelle, an der das Ausbreiten durchgeführt wird, von der Unterseite des Förderbandes nach oben zu dessen Oberseite, wo der Schlamm ausgebreitet ist, geleitet werden.

3. Verfahren gemäß Anspruch 1 oder 2, dadurch gekennzeichnet, daß sich die Düse im wesentlichen mit konstanter Geschwindigkeit relativ zur Oberfläche des Förderbandes, auf der der Schlamm ausgebreitet ist, bewegt.

4. Verfahren gemäß einem der Ansprüche 1 bis 3, dadurch gekennzeichnet, daß das Verfahren einen ersten Verfahrensschritt (a), der aus einem Trocknungsverfahren besteht, und zusätzlich zum ersten Verfahrensschritt mindestens zwei Verfahrensschritte umfaßt, wobei im zweiten Schritt (b) der Schlamm in einem Verbrennungsofen verbrannt wird, und in einem dritten Schritt (c) die Asche aus dem Verbrennungsofen abgeführt wird und als Füllmaterial für Straßen verwendet oder weiterverarbeitet wird, wobei Abgas aus der Verbrennung in dem Verbrennungsofen zur Verwendung bei der Trocknung und dem Entgasen des Schlammes in den ersten Verfahrensschritt geleitet wird, und das Abgas danach ganz oder teilweise nach außen in die Umgebung geleitet wird.

5. Verfahren gemäß einem der Ansprüche 1 bis 4, dadurch gekennzeichnet, daß das Trocknungsverfahren in zwei Teilverfahren (a1, a2) aufgeteilt ist, wobei in dem ersten Teilverfahren (a1) der Schlamm auf einem ersten Fördergerät ausgebreitet wird und hier von Gasen durchdrungen wird, die die höchste Temperatur aufweisen, und danach im zweiten Teilverfahren der Schlamm von dem ersten Fördergerät z.B. durch Herunterfallen auf ein zweites Fördergerät überführt wird, wo der Schlamm von Gasen mit niedrigerer Temperatur als in dem ersten Teilverfahren (a1) durchdrungen wird.

6. Verfahren gemäß den Ansprüchen 1, 4 und 5, dadurch gekennzeichnet, daß im zweiten Verfahrensschritt (b) eine Nachverbrennung durchgeführt wird, wobei die Abgase länger als zwei Sekunden bei über 875°C gehalten werden, daß die Temperatur im zweiten Teilverfahren (a2) zwischen 40 und 65°C beträgt, und daß die Abgase nach dem zweiten Schritt (b) durch einen Abgaswäscher geleitet werden, bevor sie nach außen in die Umgebung gleitet werden.

7. Verfahren gemäß Anspruch 5 oder 6, dadurch gekennzeichnet, daß die Kondensationswärme eines Teilstromes der Gase, die das erste Teilverfahren (a1) über einen Rauchwäscher und einen Wärmeaustauscherkreislauf durchlaufen haben, zum Erwärmen der Gase im zweiten Teilverfahren (a2) verwendet wird.

8. Verfahren gemäß Anspruch 6 oder 7, dadurch gekennzeichnet, daß der Hauptanteil des Trocknungsgases in beiden Teilverfahren (a1, a2) in den Kreislauf zurückgeführt wird, und daß ein Frischluftstrom dem zweiten Teilverfahren (a2) zugeführt wird, so daß hier die Frischluft durch Vermischung mit in den Kreislauf zurückgeführten Gasen erhitzt wird, während gleichzeitig ein Teilstrom der Trocknungsluft entsprechend dem Sauerstoffbedarf des Ofens zum Verbrennungslufteinlaß des Ofens geleitet wird.

9. Verfahren gemäß einem der Ansprüche 1 bis 8, dadurch gekennzeichnet, daß ein Teilstrom der Gase, die das Trocknungsverfahren durchlaufen haben, zu einem Gaswäscher geleitet wird, wo die Gase gegen einen Strom verflüssigter oder zerstäubter Schwefelsäure geleitet werden, wodurch Ammoniak im Luftstrom durch die Schwefelsäure als Ammoniumsulfat ausgefällt wird, und daß die Gase schließlich zu einem Abgaswäscher geleitet werden, bevor sie nach außen in die Umgebung abgeleitet werden.

10. Anlage zur Verwendung bei der Durchführung des Verfahrens gemäß Anspruch 1, die ein Trocknungsgerät für organischen Schlamm, insbesondere Abwasserschlamm umfaßt, wobei die Anlage ausgestattet ist mit einem Fördergerät, das von Luft durchdrungen werden kann und das mit kontrollierter Geschwindigkeit angetrieben werden kann, und mit einer Vorrichtung zum Ausbreiten von Schlamm auf dem Fördergerät in einer Form, bei der das Verhältnis der Oberfläche zum Volumen größer als 4 cm$^{-1}$, vorzugsweise zwischen 5 cm$^{-1}$ und 13 cm$^{-1}$ ist, wobei das Verhältnis durch Teilen der Oberfläche durch das Volumen, wie sie sich im Zustand unmittelbar nach dem Ausbreiten ergeben, errechnet wird, und wobei das Trocknungsgerät mit einer oder mehreren Einblasöffnungen für heiße Gase zum Trocknen des Schlammes ausgestattet ist und/oder Leitplatten für die Gase in einer Weise angeordnet sind, daß die Gase durch das Fördergerät gepreßt werden und so den Schlamm überstreichen, dadurch gekennzeichnet, daß die Vorrichtung zum Ausbreiten des Schlammes aus einer oder mehreren voneinander getrennten Düsen besteht, die quer zur Laufrichtung des Förderbandes bewegt werden können, und wobei die Leitplatten und die Einblasöffnungen für die Gase so angeordnet sind, daß die Gase gezwungen werden, an der Stelle oder an den Stellen, an denen der Schlamm während des Ausbreitens auf das Förderband gelegt wird, durch das Förderband zu strömen.

11. Anlage gemäß Anspruch 10, dadurch gekennzeichnet, daß die Leitplatten und/oder die Einblasöffnungen für die Trocknungsgase so angeordnet sind, daß die Gase gezwungen werden, durch das Förderband von der Unterseite des Bandes nach oben zu dessen Oberseite in den Bereich zu strömen, der durch die Düse während des Ausbreitens überquert werden kann.

12. Anlage gemäß Anspruch 10 oder 11, dadurch gekennzeichnet, daß jede Düse eine Düsenöffnung mit einem Innendurchmesser im Bereich von 0,3 bis 1,0 cm, vorzugsweise zwischen 0,5 und 0,8 cm, aufweist.

13. Anlage gemäß einem der Ansprüche 10 bis 12, dadurch gekennzeichnet, daß die Düse am Ende eines Armes angeordnet ist, der mit einem Kontrollstab für eine Rolle verbunden ist, die der Oberfläche einer rotierenden Nocke folgt.

14. Anlage gemäß einem der Ansprüche 10 bis 13, dadurch gekennzeichnet, daß das Trocknungsgerät zwei Fördergeräte umfaßt, die von Luft durchströmt werden können, wobei eine erste Förderanlage über einer zweiten und die zweite im Verhältnis zur ersten versetzt angeordnet ist, so daß Material auf dem oberen Band von einem Ende des Bandes auf das untere Band fallen kann, und daß das erste und zweite Band mit Einström- bzw. Ausströmöffnungen ausgestattet sind, die mit ihrem jeweiligen Luftkanalsystem zur Rückführung eines Teils der Gase in den Kreislauf verbunden sind, und daß sich zwischen den Bändern Trennwände befinden, die die Luft um die Bänder trennen, abgesehen vom Endbereich des oberen Bandes.

15. Anlage gemäß Anspruch 14, dadurch gekennzeichnet, daß sie über der Trennwand im Trocknungsgerät statt mit einem Fördergerät mit zwei oder mehreren Fördergeräten ausgestattet ist, die übereinander und/oder nebeneinander angeordnet sind und parallel arbeiten, wobei jedes mit einem eigenen Gerät zum Ausbreiten des Schlammes auf die Bänder ausgestattet ist, und die Bänder in einer Weise zueinander angeordnet sind, daß das auf dem Förderband transportierte Material frei auf das Förderband unter der Trennwand fallen kann.

**Revendications**

1. Procédé d'élimination de boues organiques, en particulier de boues d'épuration contenant au maximum 40 % de matière sèche, et comprenant un procédé de séchage dans lequel la boue est épandue sur une bande transporteuse entraînée à une vitesse commandée, et dans lequel la boue est épandue de manière telle que la surface libre de la boue divisée par le volume de la boue donne un rapport d'au moins 4 $cm^{-1}$, de préférence compris entre 5 et 13 $cm^{-1}$, et dans lequel la boue est séchée pendant son transport sur la bande transporteuse par des gaz chauds qui traversent la bande transporteuse, caractérisé en ce que la boue est épandue sur la bande transporteuse par l'intermédiaire d'une ou de plusieurs buses séparées qui, au cours de l'opération d'épandage, sont déplacées transversalement à la direction d'alimentation de la bande, de sorte que se forme un filet de boue ou plusieurs filets de boue séparés, et dans lequel la bande, à l'endroit où la boue est épandue, est traversée par les gaz, qui ont à cet endroit une température d'au moins 110°C, de préférence comprise entre 150 et 250°C.

2. Procédé selon la revendication 1, caractérisé en ce que les gaz, à l'endroit où est réalisé l'épandage, sont dirigés vers le haut, selon la direction allant de la face inférieure de la bande à sa face supérieure, où la boue est épandue.

3. Procédé selon la revendication 1 ou 2, caractérisé en ce que la buse se déplace à une vitesse sensiblement constante par rapport à la surface de la bande sur laquelle la boue est épandue.

4. Procédé selon l'une quelconque des revendications 1 à 3, caractérisé en ce que le procédé comprend une première étape de procédé (a), qui est le procédé de séchage, et au moins deux étapes de procédé en plus de la première étape de procédé, dans lequel lors de la deuxième étape (b) la boue est brûlée dans un four de combustion, et dans lequel lors d'une troisième étape (c) les cendres provenant du four sont détournées pour se déposer en vue d'être utilisées comme charges routières ou pour un traitement ultérieur, dans lequel les effluents gazeux provenant de la combustion dans le four sont acheminés vers la première étape pour être utilisés pour le séchage et l'évacuation des gaz de la boue, et en ce que les effluents gazeux sont ensuite complètement ou partiellement conduits vers l'environnement extérieur.

5. Procédé selon l'une quelconque des revendications 1 à 4, caractérisé en ce que le procédé de séchage est divisé en deux procédés partiels (a1, a2), dans lequel, dans le premier procédé partiel (a1), la boue est épandue sur une première bande transporteuse où elle est traversée par les gaz ayant la température la plus élevée, et dans lequel, dans le deuxième procédé partiel, la boue est ensuite transférée de la première bande transporteuse vers une deuxième bande transporteuse, par exemple par gravité, où la boue est traversée par des gaz à une température plus basse que dans le premier procédé partiel (a1).

6. Procédé selon les revendications 1, 4 et 5, caractérisé en ce que, à la deuxième étape de procédé (b), une postcombustion est effectuée, dans laquelle les effluents gazeux sont maintenus pendant plus de deux secondes à plus de 875°C, en ce que la température du deuxième procédé partiel (a2) est comprise entre 40 et 65°C, et en ce que les effluents gazeux après la deuxième étape (b) sont entraînés à travers un épurateur d'effluents gazeux avant d'être relâchés dans l'environnement extérieur.

7. Procédé selon la revendication 5 ou 6, caractérisé en ce que la chaleur de condensation, dans un écoulement partiel des gaz que l'on fait passer, lors du premier procédé partiel (a1), à travers un épurateur de fumée et un circuit d'échange de chaleur, est utilisée pour chauffer les gaz dans le deuxième procédé partiel (a2).

8. Procédé selon la revendication 6 ou 7, caractérisé en ce qu'on fait recirculer la majeure partie des gaz destinés au séchage dans les deux procédés partiels (a1, a2), et en ce qu'un flux d'air nouveau est ajouté dans le deuxième procédé partiel (a2), de manière à ce que l'air nouveau y soit chauffé par mélange avec les gaz que l'on fait recirculer, tandis qu'en même temps un flux partiel d'air de séchage, correspondant au besoin du four en oxygène, est amené vers l'orifice d'admission d'air de combustion du four.

9. Procédé selon l'une quelconque des revendications 1 à 8, caractérisé en ce qu'un écoulement partiel des gaz qui ont été soumis au procédé de séchage est amené à un épurateur dans lequel les gaz sont soumis à un flux d'acide sulfurique liquéfié ou atomisé, de telle sorte que l'ammoniac dans le flux d'air soit précipité par l'acide sulfurique pour former du sulfate d'ammonium, et en ce que les gaz sont enfin conduits vers un épurateur d'effluents gazeux avant d'être relâchés dans l'environnement extérieur.

10. Installation destinée à être utilisée dans la mise en oeuvre du procédé selon la revendication 1, et comprenant un dispositif de séchage de boues organiques, en particulier de boues d'épuration, et dans laquelle est prévue une bande transporteuse qui peut être traversée par de l'air et qui peut être entraînée à une vitesse commandée, et un dispositif destiné à épandre la boue sur la bande transporteuse avec une forme donnant un rapport entre la surface et le volume, où le rapport résultant de la division de la surface par le volume immédiatement après l'épandage est supérieur à 4 cm$^{-1}$, de préférence compris entre 5 cm$^{-1}$ et 13 cm$^{-1}$, et dans laquelle le dispositif de séchage est pourvu d'une ou de plusieurs ouvertures d'injection des gaz chauds destinés au séchage de la boue et/ou de plaques de guidage des gaz disposées de telle manière que les gaz peuvent être poussés à travers la bande transporteuse pour traverser la boue, caractérisée en ce que le dispositif d'épandage de la boue se compose d'une ou de plusieurs buses séparées qui peuvent être déplacées transversalement à la direction d'alimentation de la bande transporteuse, et dans laquelle les plaques de guidage et les ouvertures d'injection des gaz sont disposées de telle manière que les gaz s'écoulent à travers la bande transporteuse au point ou aux points où la boue est épandue sur la bande au cours de l'opération d'épandage.

11. Installation selon la revendication 10, caractérisée en ce que les plaques de guidage et/ou les ouvertures d'injection des gaz destinés au séchage sont disposées de telle manière que les gaz peuvent être poussés à travers la bande transporteuse dans une direction vers le haut depuis la face inférieure de la bande jusqu'à la face supérieure de la bande dans une zone qui peut être couverte par la buse au cours de l'épandage.

12. Installation selon la revendication 10 ou 11, caractérisée en ce que chaque buse a une ouverture de buse ayant un diamètre intérieur de l'ordre de 0,3 à 1,0 cm, de préférence compris entre 0,5 et 0,8 cm.

13. Installation selon l'une quelconque des revendications 10 à 12, caractérisée en ce que la buse est disposée à l'extrémité d'un bras qui est connecté à une tige de commande d'un galet qui peut suivre la périphérie d'une came rotative.

14. Installation selon l'une quelconque des revendications 10 à 13, caractérisée en ce que le dispositif de séchage comprend deux bandes transporteuses qui peuvent être traversées par de l'air, une première bande étant disposée au-dessus d'une deuxième bande et la deuxième bande étant disposée dans une position décalée par rapport à la première, de sorte que la matière sur la bande supérieure puisse tomber depuis l'extrémité de la bande sur la bande inférieure, et en ce que des ouvertures d'injection et d'échappement sont respectivement prévues pour la première et la deuxième bandes et sont chacune connectées à leur système de canal d'air destiné à faire recirculer une partie des gaz, et en ce qu'il existe entre les bandes des parois de séparation qui séparent l'air autour des bandes, à l'exception de la zone de ladite extrémité de la bande supérieure.

15. Installation selon la revendication 14, caractérisée en ce que, au-dessus de la paroi de séparation dans le dispositif de séchage, au lieu d'une seule bande transporteuse, il est prévu deux bandes ou davantage, disposées l'une au-dessus de l'autre et/ou l'une à côté de l'autre, et fonctionnant en parallèle, et ayant chacune son propre dispositif pour épandre la boue sur les bandes, qui sont disposées l'une par rapport à l'autre de telle manière que la matière transportée peut librement tomber sur la bande sous la paroi de séparation.

solids and liquids
gases

Fig. 1

Fig. 2

Fig. 3

Fig. 4

Fig.5

Fig.6

Fig. 7a

Fig. 7b